Europäisches Patentamt

European Patent Office

Office européen des brevets

(11) Veröffentlichungsnummer: **0 239 766 B1**

(12) **EUROPÄISCHE PATENTSCHRIFT**

(45) Veröffentlichungstag der Patentschrift: 04.09.91

(51) Int. Cl.5: **G02F 1/13**, G02F 1/133

(21) Anmeldenummer: 87102236.4

(22) Anmeldetag: 17.02.87

(54) Anzeiggeeinrichtung mit Kontaktierungseinrichtung für ein Display-Element, insbesondere für eine LCD (Liquid Crystal Display).

(30) Priorität: 28.02.86 DE 8605562 U

(43) Veröffentlichungstag der Anmeldung:
07.10.87 Patentblatt 87/41

(45) Bekanntmachung des Hinweises auf die
Patenterteilung:
04.09.91 Patentblatt 91/36

(84) Benannte Vertragsstaaten:
BE DE ES FR GB IT NL SE

(56) Entgegenhaltungen:
EP-A- 0 075 213
EP-A- 0 083 253
EP-A- 0 121 149
DE-A- 3 410 983
FR-A- 2 388 461

(73) Patentinhaber: **Siemens Aktiengesellschaft
Wittelsbacherplatz 2
W-8000 München 2(DE)**

(72) Erfinder: **Wagner, Egbert, Ing. grad.
Nelkenweg 9
W-8408 Barbing(DE)**
Erfinder: **Kinzler, Hans, Dipl.-Ing. FH
Roter Brachweg 69
D-8400 Regensburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Anzeigeeinrichtung gemäß Oberbegriff von Anspruch 1.

Bei einem Display-Element soll sich das Schriftbild vom Hintergrund deutlich absetzen, um für den Benutzer eine optimale Lesbarkeit zu gewährleisten. Dies wird z.B. bei einer LCD durch ein gleichmäßig starkes Durchleuchten des transparenten Schriftbildes der LCD mit einer Beleuchtungseinrichtung erreicht.

Bei einer bekannten Anzeigeeinrichtung dieser Art ist hierzu an der Rückseite des Display-Elements ein Lichtkasten mit Lampen angeordnet, der zur Beleuchtung des Display-Elements von hinten dient. Deshalb muß die elektrische Verbindung zwischen den Kontakten des Display-Elements und Kontaktfüßen an der Anschlußseite des Lichtkastens mit Hilfe einer Kontaktierungseinrichtung um den Lichtkasten herum geführt werden. Hierzu hat man eine flexible Leiterplatte verwendet und über ein Leitgummielement mit der Anzeigeeinheit elektrisch verbunden.

Bei einer anderen bekannten Ausführungsform der Kontaktierungseinrichtung hat man Kontaktfedern in die Wandungen des Lichtkastens zur Verbindung zwischen den Kontakten des Display-Elements und den Kontaktfüßen eingespritzt.

Bei beiden Ausführungsbeispielen ist insbesondere bei einem kleinen Kontaktabstand nur mit erheblichem konstruktiven und fertigungstechnischen Aufwand zu gewährleisten, daß jeder Kontakt des Display-Elements zuverlässig mit dem jeweils zugeordneten Kontaktfuß hinter dem Lichtkasten verbunden ist.

Der Erfindung liegt daher die Aufgabe zugrunde, bei einer Anzeigeeinrichtung gemäß dem Oberbegriff von Anspruch 1 die Verbindung zwischen Display-Element und Kontaktfüßen fertigungstechnisch und konstruktiv zu vereinfachen.

Die Lösung dieser Aufgabe ist in Anspruch 1 gekennzeichnet.

Durch die Erfindung ist zugleich gewährleistet, daß die Kontaktelemente durch die Kontaktaufnahmen des Lichtkastens zuverlässig voneinander isoliert sind, und zwar auch bei einem sehr kleinen Abstand (unter 1,25 mm) voneinander.

Die Kontaktelemente der Kontaktierungseinrichtung und die Kontaktfüße sind vorteilhaft einstückig und aus Blechtafeln gestanzt. Die Form dieser Blechstanzteile in der Stanzebene und quer dazu richtet sich nach der Form der Kontaktaufnahmen, die beliebig auf der Außenseite des Lichtkastens angeordnet sein können.

Jedes Kontaktelement hat an einem Ende ein Kontaktstück mit einer Kontaktfläche und ist zweckmäßigerweise so ausgebildet, daß es - in eine Kontaktaufnahme des Lichtkastens eingesetzt - aus dieser etwas heraussteht und als Anschlag für das Leitgummielement dient.

Der Kontaktfuß am anderen Ende des Kontaktelements hat die Funktion, eine sichere und schnelle Verbindung mit einer Anschlußeinheit herzustellen. Soll die Anzeigeeinrichtung z.B. auf einer Leiterplatte verlötet werden, ist es zweckmäßig, den Kontaktfuß als zugespitzten Lötfuß oder auch in Form mehrerer solcher Lötfüße auszubilden. Der Kontaktfuß kann aber auch als Steckerfuß ausgebildet sein, wenn diesem ein entsprechender Stecker in der Anschlußeinheit zugeordnet ist.

Zwischen Kontaktfuß und Kontaktstück hat jedes Kontaktelement ein Verbindungsstück, dessen Länge sich nach der Tiefe des Lichtkastens richtet.

Es ist zweckmäßig, die Kontaktelemente kraftschlüssig in den Kontaktaufnahmen des Lichtkastens zu fixieren. Die Kontaktaufnahmen und die Kontaktelemente werden deshalb vorzugsweise derart ausgebildet, daß die Haftreibung zwischen Kontaktaufnahme und eingelegtem Kontaktelement ausreicht, um das Kontaktelement festzuhalten. Es kann aber auch eine Rast- oder eine Klebeverbindung zwischen den Kontaktelementen und den Kontaktaufnahmen vorgesehen sein.

Vorzugsweise überragen die Trennwände zwischen den Kontaktaufnahmen die Kontaktelemente; zur Sicherung jedes Kontaktelementes in einer Kontaktaufnahme kann dann mindestens eine Sperrnase dienen, die durch thermische oder mechanische Quetschung der Trennwand zwischen zwei Kontaktaufnahmen gebildet wird.

Wenn die Kontakte an dem Display-Element an jeweils zwei gegenüberliegenden Seiten angeordnet sind, ist es zweckmäßig, die Kontaktaufnahmen für die zugehörigen Kontaktelementen an zwei einander gegenüberliegenden Seiten der Außenseite des Lichtkastens anzuordnen. Dadurch ergibt sich bei eingesetzten Kontaktelementen der Vorteil, daß die im Inneren des Lichtkastens durch die Lampen entstehende Wärme besser abgeführt wird, und daß der Lichtkasten und damit die gesamte Anzeigeeinrichtung durch die langgestreckten Blechstanzteile zusätzlich stabilisiert wird.

Die Teile der Anzeigeeinrichtung werden durch einen Spannrahmen mit einem Anschlag mechanisch zusammengehalten, der sich zweckmäßigerweise an einer Anschlagstufe am Lichtkasten abstützt. Der Spannrahmen hat zusätzlich die Funktion, einen ausreichenden Kontaktdruck zwischen jedem Kontaktstück des Kontaktelements und dem Leitgummielement als auch zwischen dem Leitgummielement und dem Display-Element aufrecht zu erhalten. Der Anschlag kann linienförmig durchgehend ausgebildet oder in einzelne Anschlagpunkte aufgelöst sein; er kann auch als Schnappteil, als Sicke oder als eingeklappter oder eingebogener Lappen ausgebildet sein.

Wenn der Anschlag des Spannrahmens in einzelne Anschlagpunkte aufgelöst ist, ist zweckmäßigerweise ein Druckstück zwischen den Anschlagstufen des Lichtkastens und diesen Anschlagpunkten, z.B. den Lappen des Spannrahmens, eingefügt. Damit erhält man eine gleichmäßige Druckverteilung auf die Anschlagstufe des Lichtkastens.

Weitere vorteilhafte Ausgestaltungen sind in den Unteransprüchen gekennzeichnet.

Die Erfindung wird im folgenden durch ein Ausführungsbeispiel näher erläutert. Es zeigen:

FIG 1    einen Querschnitt durch die Anzeigeeinrichtung entlang Linie I-I in FIG 4,

FIG 2    die Seitenansicht eines Kontaktelements,

FIG 3    einen vergrößerten Ausschnitt III. aus FIG 1,

FIG 4    die Frontansicht des Lichtkastens mit eingelegten Kontaktelementen in Richtung des Pfeiles IV in FIG 1 und FIG 5,

FIG 5    eine Ansicht des Lichtkastens in Richtung des Pfeils V in FIG 4, teilweise ausgeschnitten längs der Schnittlinie V in FIG 4, und

FIG 6    die rückseitige Ansicht des Lichtkastens in Richtung des Pfeiles VI in FIG 1 und 5.

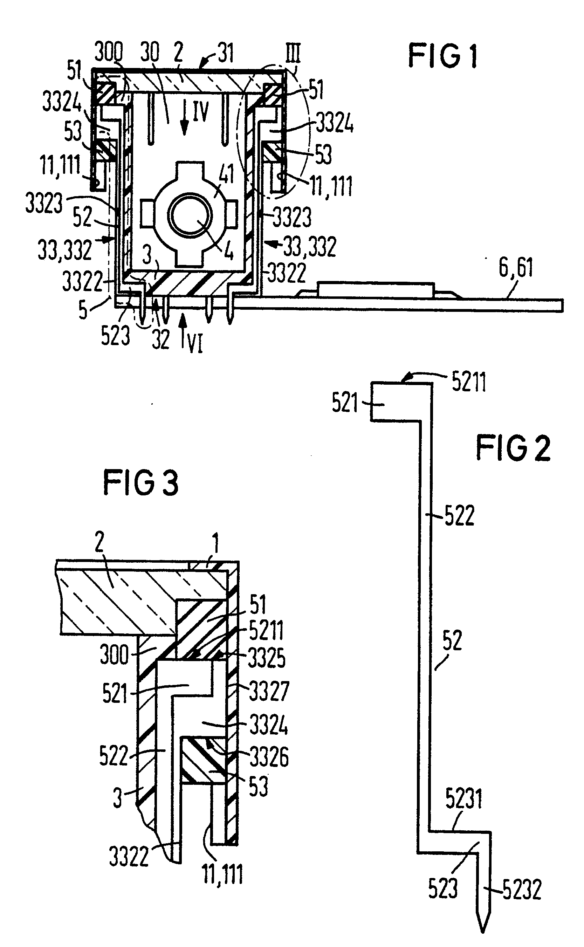

Die Anzeigeeinrichtung besteht im wesentlichen aus einem Lichtkasten 3, einer LCD 2, einer Kontaktierungseinrichtung 5 und einem Spannrahmen 1, der alle Teile zusammenhält (FIG 1).

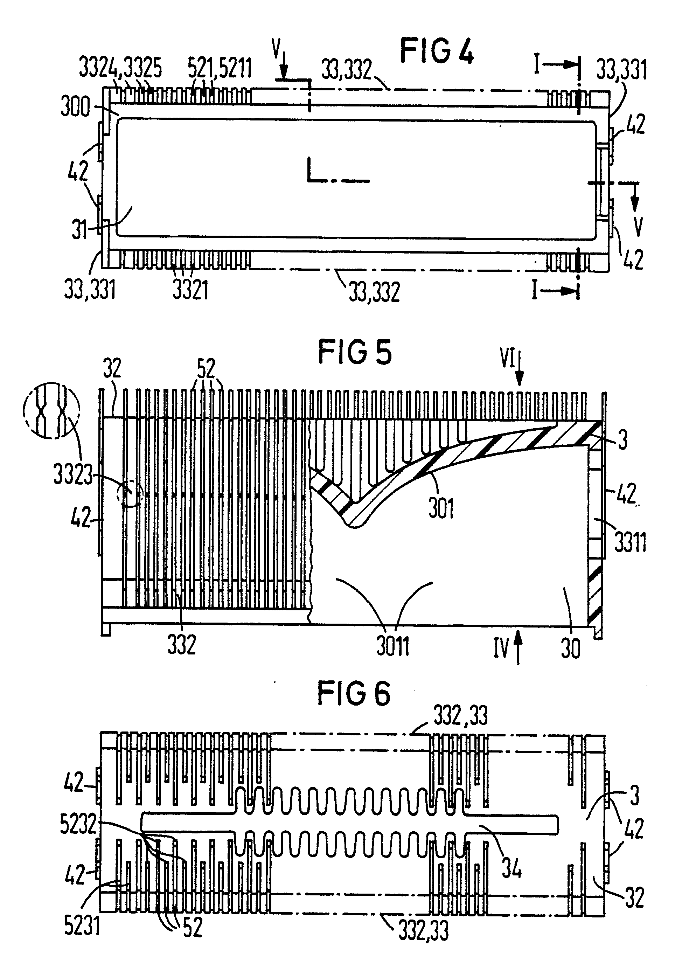

Der quaderförmige Lichtkasten 3 ist ein Kunststoffspritzteil. Frontseitig hat der Lichtkasten 3 ein Fenster 31, das von dem Rahmen 300 eingefaßt ist (Ansicht FIG 4). Rückseitig ist der Lichtkasten durch eine Anschlußseite 32 abgeschlossen (FIG 6). Die übrigen vier Seiten bilden die Außenseite 33 des Lichtkastens 3 mit zwei gegenüberliegenden Schmalseiten 331 und zwei gegenüberliegenden Breitseiten 332.

Der Innenraum 30 des Lichtkastens 3 ist als Reflektor 301 mit zwei Reflektorkammern 3011 ausgebildet. In jeder Reflektorkammer 3011 ist eine Lampe 4 mit Fassung 41 angeordnet. Die beiden Lampen 4 sind samt Fassungen 41 durch Öffnungen 3311 in der Schmalseiten 331 des Lichtkastens 3 in den Innenraum 30 des Lichtkastens 3 eingeführt. An jeder Schmalseite 331 des Lichtkastens 3 sind zwei Kontakte 42 angenietet, die zur Kontaktierung der Lampen 4 dienen und zur Anschlußseite 32 führen.

Die zwei gegenüberliegenden Breitseiten 332 der Außenseite 33 des Lichtkastens 3 sind identisch ausgebildet. Jede Breitseite 332 hat eine Anschlagstufe 3324, die parallel zum Rahmen 300 des Lichtkastens 3 verläuft. Rechtwinklig zu den Anschlagstufen 3324 sind schlitzförmige Kontaktaufnahmen 3321 auf den Breitseiten 332 ausgebildet. Dabei durchbrechen die Kontaktaufnahmen 3321 die Anschlagstufen 3324 und schließen mit der Stirnseite 3325 der Anschlagstufen 3324 in etwa bündig ab. Die Kontaktaufnahmen 3321 sind in einem regelmäßigen Abstand voneinander, der dem Rastermaß der Kontakte der LCD 2 entspricht, angeordnet. Zwischen den Kontaktaufnahmen 3321 sind Trennwände 3322 angeordnet.

Die Kontaktaufnahmen 3321 erstrecken sich von den Breitseiten 332 auf die Anschlußseite 32. Dort sind benachbarte Kontaktaufnahmen 3321 unterschiedlich lang ausgebildet.

Zur Materialersparnis bei der Herstellung hat der Lichtkasten 3 eine Aussparung 34 (FIG 6).

Jedes Kontaktelement 52 ist als Blechstanzteil ausgebildet. In FIG 2 sind die Breitseiten eines solchen Blechstanzteils dargestellt. Es besteht aus einem langgestreckten Verbindungsstück 522, das zwischen einem Kontaktstück 521 und einem Kontaktfuß 523 ausgebildet ist. Das Kontaktstück 521 steht rechtwinklig vom Verbindungsstück 522 ab.

Der Kontaktfuß 523 des Kontaktelements 52 besteht aus einem Lötfußträger 5231, der rechtwinklig am Verbindungsstück 522 ansetzt, und einem zugespitzten Lötfuß 5232, der wiederum rechtwinklig am Lötfußträger 5231 ansetzt und parallel zum Verbindungsstück 522 ausgerichtet ist. Die Kontaktaufnahmen 3321 des Lichtkastens 3 sind so ausgerichtet, daß die Breitseiten (Fig. 2) jedes eingesteckten Kontaktelements 52 senkrecht auf der Breitseite 332 bzw. der Anschlußseite 32 des Lichtkastens 3 stehen.

Zur Befestigung der in die Kontaktaufnahmen 3321 eingelegten Kontaktelemente 52 sind an den Trennwänden 3322 zwischen den Kontaktaufnahmen 3321 Sperrnasen 3323 ausgebildet, die die Kontaktelemente 52 in den Kontaktaufnahmen 3321 fixieren. Hierzu überragen die Trennwände 3322 zwischen den Kontaktaufnahmen 3321 die eingelegten Kontaktelemente 52 etwas, damit ein sicheres Überlappen der Kontaktelemente 52 durch die Sperrnasen 3323 in einem Herstellungsgang für die Breitseiten 332 des Lichtkastens 3 sichergestellt ist.

Die LCD 2 ist zwischen dem Rahmen 300 des Lichtkastens 3 und dem Spannrahmen 1 eingespannt. Dabei drückt der Anschlag 11, der aus mehreren eingebogenen Lappen 111 des Spannrahmens 1 besteht, gegen die parallel zu den Anschlagstufen 3324 angeordneten metallischen Druckstücke 53. Diese sind zwischen dem Anschlag 11 des Spannrahmens 1 und der Andruckfläche 3326 der Anschlagstufe 3324 eingespannt. Dadurch wird der Druck des Anschlags 11 des Spannrahmens 1 gleichmäßig auf die Anschlagstufen 3324 des Lichtkastens 3 verteilt. Damit ist die Einspannung der LCD 2 zwischen dem Rahmen 300 des Lichtkastens 3 und dem Spannrahmen 1 sichergestellt. Die Kontaktstücke 521 der Kontaktelemente 52 sind zwischen den Anschlagstufen 3324 des Lichtkastens 3 angeordnet. Dabei überragen die Anschlagstufen 3324 die Kontaktstücke 521 etwas. Die Stirnseiten 3325 sind im Vergleich zu den Kontaktflächen 5211 der Kontaktstücke 521 etwas zurückversetzt. Die Oberseiten 3327 der Anschlagstufen 3324 berühren den metallischen Spannrahmen 1.

Der Kontakt zwischen den Kontakten der LCD 2 und den Kontaktstücken 521 der Kontaktelemente 52 wird durch ein langgestrecktes, parallel zur Anschlagstufe 3324 geführtes Leitgummielement 51 pro Breitseite 332 des Lichtkastens 3 sichergestellt. Der zur Kontaktierung notwendige Kontaktdruck zwischen den Kontaktflächen 5211 der Kontaktstücke 521 und den Leitgummielementen 51 und den Leitgummielementen 51 und den Kontakten der LCD 2 ist durch die Einspannung der Leitgummielemente 51 zwischen LCD 2 und den Anschlagstufen 3324 des Lichtkastens durch den Spannrahmen 1 gewährleistet (FIG 3).

Die Anzeigeeinrichtung ist mit ihren Lötfüßen 5232 auf einer Anschlußeinheit 6, einer Leiterplatte 61, verlötet.

Begriffsliste

Anzeigeeinrichtung

| | |
|---|---|
| 1 | Spannrahmen |
| 11 | Anschlag |
| 111 | Lappen |
| | Display-Element |
| 2 | LCD (Liquid Crystal Display) |
| 3 | Lichtkasten |
| 30 | Innenraum |
| 300 | Rahmen |
| 301 | Reflektor |
| 3011 | Reflektorkammer |
| | Kunststoffspritzteil |
| 31 | Fenster |
| 32 | Anschlußseite |
| 33 | Außenseite |
| 331 | Schmalseite |
| 3311 | Öffnung |
| 332 | Breitseite |
| 3321 | Kontaktaufnahme |
| 3322 | Trennwand |
| 3323 | Sperrnase |
| 3324 | Anschlagstufe |
| 3325 | Stirnseite |
| 3326 | Andruckfläche |
| 3327 | Oberseite |
| 34 | Aussparung |
| 4 | Lampe |
| 41 | Fassung |
| 42 | Kontakt |
| 5 | Kontaktierungseinrichtung |
| 51 | Leitgummielement |
| 52 | Kontaktelement |
| | Blechstanzteil |
| 521 | Kontaktstück |
| 5211 | Kontaktfläche |
| 522 | Verbindungsstück |
| 523 | Kontaktfuß |
| 5231 | Lötfußträger |
| 5232 | Lötfuß |
| 53 | Druckstück |
| 6 | Anschlußeinheit |
| 61 | Leiterplatte |

**Patentansprüche**

1. Anzeigeeinrichtung

   mit einem Display-Element mit Kontakten, insbesondere einer LCD (Liquid Crystal Display) (2),

   mit einer Beleuchtungseinrichtung mit einem quaderförmigen Lichtkasten (3), der an der Rückseite des Display-Elements (2) befestigt ist, dessen zum Display-Element (2) senkrecht stehende zwei Schmalseiten und zwei breitseiten die Außenseite (33) bilden und dessen dem Display-Element (2) gegenüberliegende Seite die Anschlußseite (32) bildet,

   mit einer Kontaktierungseinrichtung (5) bestehend aus einem Leitgummielement (51) und Kontaktelementen (52) zur elektrischen Verbindung jedes Kontaktes des Display-Elements (2) mit einem Kontaktfuß (523) an der Anschlußseite (32),

   **dadurch gekennzeichnet,**
   daß der Lichtkasten (3) auf der Außenseite (33) je Kontaktelement (52) eine durch Trennwände (3322) begrenzte Kontaktaufnahme (3321) aufweist, in die ein Kontaktelement (52) eingelegt ist.

2. Anzeigeeinrichtung nach Anspruch 1, **dadurch gekennzeichnet,** daß die Kontaktelemente (52) kraftschlüssig in den Kontaktaufnahmen (3321) des Lichtkastens (3) stecken.

3. Anzeigeeinrichtung nach Anspruch 1 oder 2, **dadurch gekennzeichnet,** daß die Trennwände (3322) die Kontaktelemente (52) etwas Überragen und an einer Stelle eine Sperrnase (3323) ausgeformt ist, die das Kontaktelement (52) mindestens teilweise übergreift.

4. Anzeigeeinrichtung nach Anspruch 3, **dadurch gekennzeichnet,** daß jedes Kontaktelement (52) und der zugehörige Kontaktfuß (523) als Blechstanzteil mit Breitseiten ausgebildet ist, welches an einem Ende ein Kontaktstück (521) mit einer Kontaktfläche (5211) hat, daß das Kontaktstück über ein Verbindungsstück (522) mit dem Kontaktfuß (523) verbunden ist, und daß die Breitseiten jedes Kontaktelementes (52) rechtwinklig auf der Außenseite (33) des Lichtkastens (3) stehen.

5. Anzeigeeinrichtung nach Anspruch 4, **dadurch gekennzeichnet,** daß der Kontaktfuß (523) aus einem Lötfußträger (5231) und mindestens einem Lötfuß (5232) besteht,

daß der Lötfußträger (5231) rechtwinklig an einem Ende des Verbindungsstücks (522) angeordnet ist,

daß der Lötfuß (5232) rechtwinklig am Lötfußträger (5231) angeordnet ist.

6. Anzeigeeinrichtung nach Anspruch 5, **dadurch gekennzeichnet,** daß die Lötfußträger (5231) einander benachbarter Kontaktelemente (52) unterschiedliche Länge haben und daß sich die Kontaktaufnahmen (3321) für die Lötfußträger von der Außenseite (33) des Lichtkastens her in die Anschlußseite (32) hinein erstrecken.

7. Anzeigeeinrichtung nach Anspruch 6, **dadurch gekennzeichnet,** daß die Kontaktaufnahmen (3321) an jeweils zwei gegenüberliegenden Seiten der Außenseite (33) des Lichtkastens (3) angeordnet sind.

8. Anzeigeeinrichtung nach einem der Ansprüche 1 bis 7, **dadurch gekennzeichnet,** daß der Lichtkasten (3) auf zwei einander gegenüberliegenden Seiten der Außenseite (33) je eine Anschlagstufe (3324) hat, und daß ein Spannrahmen (1) vorgesehen ist, der das Display-Element übergreift und der sich mit einem Anschlag (11) gegen die Anschlagstufe (3324) abstützt.

9. Anzeigeeinrichtung nach Anspruch 8, **dadurch gekennzeichnet,** daß zwischen Anschlagstufe (3324) und Anschlag (11) ein Druckstück (53) angeordnet ist.

**Claims**

1. Display device comprising
a display element with contacts, preferably an LCD (liquid crystal display) (2),

an illumination device having a cuboid light box (3) which is secured to the rear of the display element (2) and whose two narrow sides perpendicular to the display element (2) and two wide sides form the outside (33) and whose side opposite the display element (2) forms the connecting side (32),
a contacting device (5) consisting of a conductive rubber element (51) and contact elements (52) for the electrical connection of each contact of the display element (2) to a contact foot (523) on the connecting side (32),
characterised in that on the outside (33) the light box (3) has for each contact element (52) a contact receptacle (3321), which is bordered by partitions (3322) and into which a contact element (52) is inserted.

2. Display device according to Claim 1, characterised in that the contact elements (52) are plugged non-positively into the contact receptacles (3321) of the light box (3).

3. Display device according to Claim 1 or 2, characterised in that the partitions (3322) project somewhat beyond the contact elements (52) and there is formed outwards at a location a retention nose (3323) which at least partially embraces the contact element (52).

4. Display device according to Claim 3, characterised in that each contact element (52) and the appertaining contact foot (523) is fashioned as a punched sheet metal part having wide sides, which has at one end a contact maker (521) having a contact face (5211), in that the contact maker is connected to the contact foot (523) via a connecting piece (522), and in that the wide sides of each contact element (52) are perpendicular to the outside (33) of the light box (3).

5. Display device according to Claim 4, characterised in that the contact foot (523) consists of a solder foot carrier (5231) and at least one solder foot (5232), in that the solder foot carrier (5231) is arranged perpendicularly at one end of the connecting piece (522), and in that the solder foot (5232) is arranged perpendicularly on the solder foot carrier (5231).

6. Display device according to Claim 5, characterised in that the solder foot carriers (5231) of mutually neighbouring contact elements (52) have a different length, and in that the contact receptacles (3321) for the solder foot carriers extend into the connecting side (32) from the outside (33) of the light box.

7. Display device according to Claim 6, characterised in that the contact receptacles (3321) are arranged at respectively two opposite sides of the outside (33) of the light box (3).

8. Display device according to one of Claims 1 to 7, characterised in that the light box (3) has a respective stop step (3324) on two mutually opposite sides of the outside (33), and in that a tentering frame (1) is provided which embraces the display element and which is supported by a stop (11) against the stop step (3324).

9. Display device according to Claim 8, characterised in that a pressure member (53) is arranged between the stop step (3324) and stop (11).

**Revendications**

1. Dispositif d'affichage comportant
   un élément d'affichage possédant des contacts, de préférence un dispositif LCD (dispositif d'affichage à cristal liquide) (2),
   un dispositif d'éclairage possédant une boîte à lumière parallélépipédique (3), qui est fixée au côté arrière de l'élément d'affichage (2), deux petits côtés et deux grands côtés de la boîte à lumière, qui sont perpendiculaires à l'élément d'affichage (2), formant la face extérieure (33), tandis que le côté situé à l'opposé de l'élément d'affichage (2) forme la face de raccordement (32),
   un dispositif (5) d'établissement du contact, qui est constitué par un élément en caoutchouc conducteur (51) et des éléments de contact (52) servant à raccorder électriquement chaque contact de l'élément d'affichage (2) à un pied de contact (523) sur la face de raccordement (32),
   caractérisé par le fait que la boîte à lumière (3) possède, sur la face extérieure (33), pour chaque élément de contact (52), un logement de contact (3321), qui est limité par des parois de séparation (3322) et dans lequel est inséré un élément de contact (52).

2. Dispositif d'affichage suivant la revendication 1, caractérisé par le fait que les éléments de contact (52) sont enfichés selon une liaison de force dans les logements de contact (3321) de la boîte à lumière (3).

3. Dispositif d'affichage suivant la revendication 1 ou 2, caractérisé par le fait que les parois de séparation (3322) font légèrement saillie par rapport aux éléments de contact (52) et qu'en un emplacement est formé par moulage un bec de blocage (3323), qui s'engage au moins partiellement par-dessus l'élément de contact (52).

4. Dispositif d'affichage suivant la revendication 3, caractérisé par le fait que chaque élément de contact (52) et le pied de contact associé (523) sont réalisés sous la forme d'une pièce découpée en tôle comportant des grands côtés et possédant, à une extrémité, une pièce de contact (521) possédant une surface de contact (5211), que la pièce de contact est raccordée au pied de contact (523) par l'intermédiaire d'un élément de jonction (522), et que les côtés larges de chaque élément de contact (52) sont perpendiculaires à la face extérieure (33) de la boîte à lumière (3).

5. Dispositif d'affichage suivant la revendication 4, caractérisé par le fait que le pied de contact (523) est constitué par un support (5231) d'une patte de soudure et par au moins une patte de soudure (5232),
   que le support (5231) de la patte de soudure est disposé perpendiculairement à une extrémité de l'élément de jonction (522) et
   que la patte de soudure (5232) est disposée perpendiculairement sur le support (5231).

6. Dispositif d'affichage suivant la revendication 5, caractérisé par le fait que les supports (5231) de pattes de soudure d'éléments de contact voisins (52) possèdent des longueurs différentes et que les logements de contact (3321) pour les supports des pattes de soudure pénètrent, à partir de la face extérieure (33) de la boîte à lumière, dans la face de raccordement (32).

7. Dispositif d'affichage suivant la revendication 6, caractérisé par le fait que les logements de contact (3321) sont disposés sur deux côtés opposés de la face supérieure (33) de la boîte à lumière (3).

8. Dispositif d'affichage suivant l'une des revendications 1 à 7, caractérisé par le fait que la boîte à lumière (3) possède respectivement, sur deux côtés réciproquement opposés de la face extérieure (33), un épaulement de butée (3,324), et qu'il est prévu un cadre de serrage (1) qui enserre l'élément d'affichage et prend appui par une butée (11) contre l'épaulement de butée (3324).

9. Dispositif d'affichage suivant la revendication 8, caractérisé par le fait qu'un élément de pression (53) est disposé entre l'épaulement de butée (3321) et la butée (11).

FIG 1

FIG 2

FIG 3

## FIG 4

3324,3325   521,5211   V   33,332   I→   33,331

300

42

31

33,331   3321   33,332   I→

## FIG 5

32   52   VI↓

3   42   3311

3323

42

332   3011   IV↑   30

301

## FIG 6

332,33

42

3

42

5232

34

32

5231   52   332,33